# EUROPEAN PATENT SPECIFICATION

(11) **EP 2 469 453 B1**
(45) Date of publication and mention of the grant of the patent: **01.03.2017**
(21) Application number: 10196344.5
(22) Date of filing: 21.12.2010
(51) Int. Cl.: G06K 19/073, H05K 9/00, H01M 2/34

(54) **Communications device including radio frequency (rf) signal blocking layer for near-field communication (nfc) device and related methods**
Kommunikationsvorrichtung mit RF-Signalblockierschicht für eine NFC-Vorrichtung und zugehörige Verfahren
Dispositif de communications comprenant une couche de blocage de signal de radiofréquence (RF) pour dispositif de communication de champ proche (NFC) et procédés apparentés

(43) Date of publication of application: 27.06.2012
(73) Proprietor: BlackBerry Limited, Waterloo, ON N2K 0A7 (CA)
(72) Inventor: Walker, David Ryan, Waterloo Ontario N2L 3W8 (CA); Griffin, Jason Tyler, Waterloo Ontario N2L 3W8 (CA); Fyke, Steven Henry, Waterloo Ontario N2L 3W8 (CA)
(74) Representative: Roberts, Gwilym Vaughan

(56) References cited:
- GB-A- 2 419 781
- US-A1- 2006 290 501
- US-A1- 2009 026 751

## Description

### Technical Field

This application relates to the field of communications, and more particularly, to communications devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near-field communication (NFC) chips. NFC technology is used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters. NFC circuitry may also be implemented in other communications devices, such as NFC tags, for example.

GB 2419781A discloses a packaged product comprising an inductively powered transponder such as a memory tag or radio frequency identification (RFID) which contains digital content; the packaging adapted to prevent sufficient signal to reach an antenna of the transponder enabling the memory to be read. The adapted packaging may have an absorbing device or a metallic layer which can be peeled off or scratched off. Alternatively a Faraday cage may be created around the transponder device. Preferably the adapted packaging consists of a metallic layer such as foil and the metallic layer being at least five times a skin depth at the operating frequency of the inductively powered transponder.

### Summary

An invention is set out in the claims.

### Brief Description of the Drawings

FIG. 1 is a schematic block diagram of a communications device in accordance with an example embodiment including a near-field communication (NFC) circuit device and a radio frequency (RF) signal blocking layer to block RF signal communication by the NFC circuit device.
FIG. 2 is a schematic block diagram of the communications device of FIG. 1 with the RF signal blocking layer removed to permit RF signal communication by the NFC circuit device.
FIG. 3 is a perspective view of an example embodiment of the communications device of FIG. 1 including a frangible scratch-off RF signal blocking layer.
FIG. 4 is a perspective view of an example embodiment of the communications device of FIG. 1 including an adhesive peel-off RF signal blocking layer.
FIG. 5 is a schematic block diagram of a communications device in accordance with an alternative example embodiment including an RF signal blocking dielectric layer configured to block RF signal communication between NFC circuitry and an associated antenna.
FIG. 6 is a schematic block diagram of the communications device of FIG. 5 with the RF signal blocking dielectric layer removed.
FIG. 7 is a schematic block diagram of a communications device in accordance with another alternative example embodiment including a power blocking dielectric layer configured to block powering of NFC circuitry by a battery.
FIG. 8 is a schematic block diagram of the communications device of FIG. 7 with the power blocking dielectric layer removed.
FIG. 9 is a schematic block diagram illustrating example components which may used in the communications devices of FIGS. 1 through 8.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communications device is disclosed herein which may include a near-field communication (NFC) circuit device, and a radio frequency (RF) signal blocking layer adhesively coupled with the NFC circuit device. The RF signal blocking layer may be configured to block RF signal communication by the NFC circuit device while coupled therewith. As such, the RF signal blocking layer may advantageously be used to prevent communication with the NFC circuit device prior to purchasing the communications device at a store, etc., for enhanced security and privacy.

More particularly, the RF signal blocking layer may comprise an electrical conductor. In one example, the RF signal blocking layer may comprise a frangible layer. In another example, a pressure-sensitive adhesive layer may be included for adhesively securing the RF signal blocking layer to the NFC circuit device.

The NFC circuit device may include a package and NFC circuitry may be carried by the package, and the communications device may further include a wireless communications circuit carried by the package. By way of example, the NFC circuit device may comprise active NFC circuitry or passive NFC circuitry, and an antenna coupled thereto.

A similar example communications device may include a NFC circuit device, an antenna coupled to the NFC circuit device, and an RF signal blocking dielectric layer removably positioned between the NFC circuit device and the antenna. The RF signal blocking dielectric layer may be configured to block RF signal communication between the NFC circuit device and the antenna when positioned therebetween, and upon removal permit RF signal communication between the NFC circuit device and the antenna.

Yet another similar example communications device may include a battery, an NFC circuit device, and a power blocking dielectric layer removably positioned between the battery and the NFC circuit device. The power blocking dielectric layer may be configured to block powering of the NFC circuit device by the battery when positioned therebetween, and upon removal permit powering of the NFC circuit device by the battery.

A related method aspect is for making a communications device and may include adhesively coupling an RF signal blocking layer with a NFC circuit device. The RF signal blocking layer may be configured to block RF signal communication by the NFC circuit device while coupled therewith.

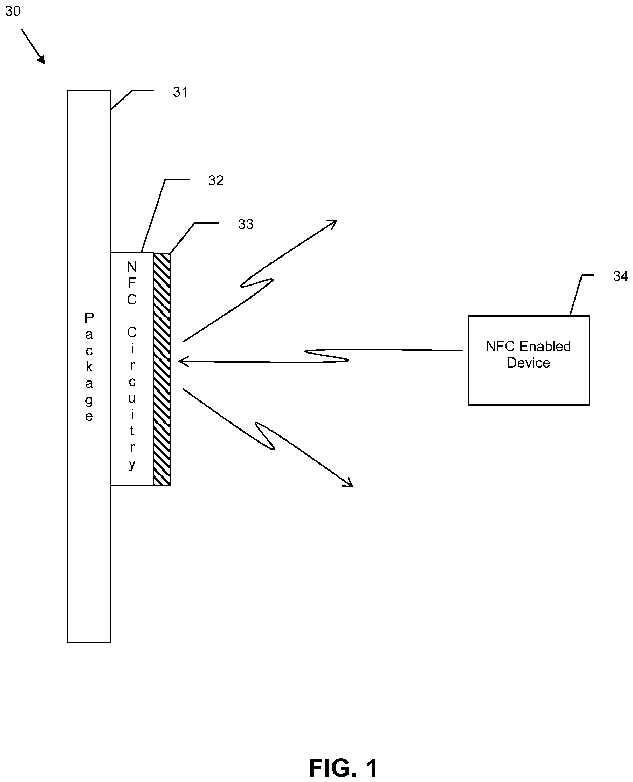

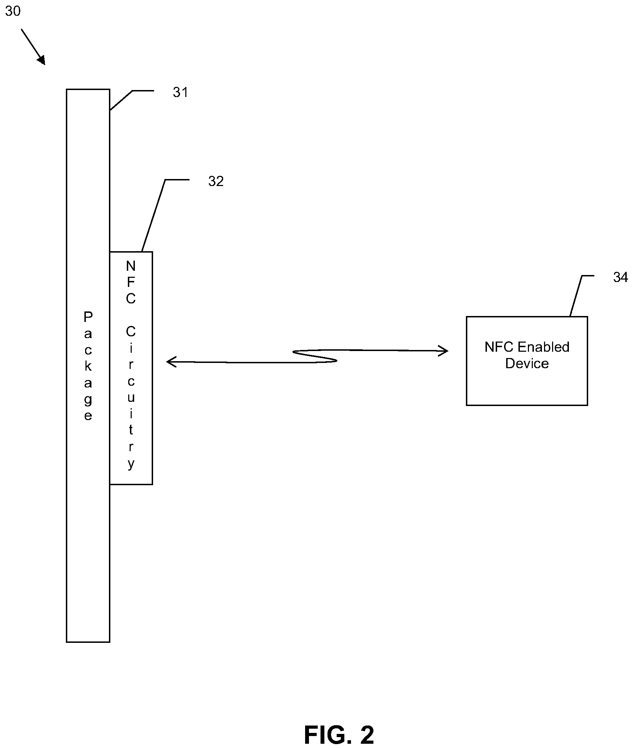

Referring initially to FIGS. 1 and 2, a communications device **30** illustratively includes a near-field communication (NFC) device including NFC circuitry **32** and a package **31** carrying the NFC circuitry **32.** In the illustrated example, the package **31** comprises a substrate (e.g., plastic, dielectric, etc.) and the NFC circuitry **32** is shown carried on an exterior surface of the package **31,** but in some embodiments the NFC circuitry **32** may be embedded or encased within the package **31,** for example. The communications device **30** further illustratively includes a radio frequency (RF) signal blocking layer **33** adhesively coupled with the NFC circuit device. In particular, in this embodiment the RF signal blocking layer **33** is adhesively coupled to the NFC circuitry **32,** but in some embodiments it may be coupled to the package **31,** such as when the NFC circuitry **32** is embedded within the package **31,** for example.

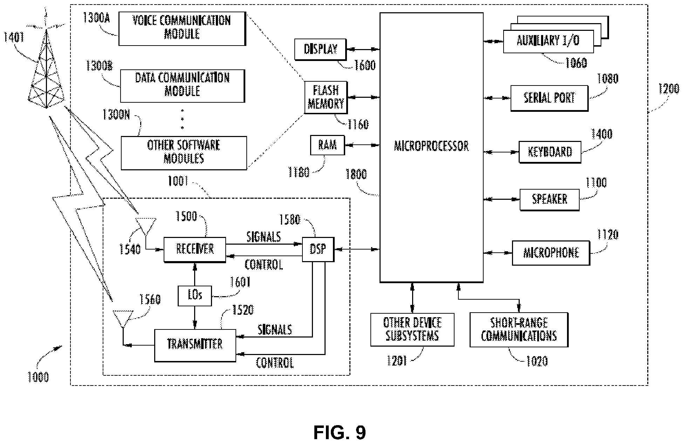

The RF signal blocking layer **33** is advantageously configured to block RF signal communication by the NFC circuitry **32** while coupled therewith (or to the package **31** in some embodiments). As shown in FIG. 1, this prevents an NFC enabled device **34** from communicating with the NFC circuitry **32,** but NFC communication is enabled or permitted upon removal of the RF signal blocking layer **33** (FIG. 2). In some embodiments, the communications device **30** may further include one or more wireless communications circuits carried by the package **31,** such as those of the communications subsystem **1001** described further below with reference to FIG. 9. The package **31** may take different forms in different embodiments, such as a card substrate, circuit board, portable device housing, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The use of the RF signal blocking layer **33** for the NFC circuitry **32** may be advantageous in various applications. Because of the relatively small dimensions in which NFC circuits or tags may be implemented, it is possible to use them in numerous product identification and security applications. For example, in retail sales applications, NFC tags may be embedded in coupons, gift cards, collectible cards or figures, etc. The information stored in the NFC tag may be associated with rebates, purchase points, or an account credit (e.g., a monetary credit, a digital media content or application download credit, etc.,), for example. Thus, a designated user or recipient may use an NFC enabled device **34** to access the information, which may provide greater ease of use and convenience.

Nonetheless, because of the value of the information stored by such NFC tags, some may attempt to surreptitiously access these NFC tags to steal the information. The RF signal blocking layer **33** advantageously prevents the NFC circuitry **32,** which may be implemented either as passive NFC circuitry or active NFC circuitry in various embodiments, from communicating until the RF signal blocking layer **33** is removed. Using an example where the communications device **30** is a gift card for loading credits onto a mobile device (e.g., mobile device application or "app" credits), the RF signal blocking layer **33** would advantageously prevent scanning of the gift card by someone other than the intended recipient. Moreover, if the RF signal blocking layer **33** was removed, then it would be visually evident that the card had been tampered with by someone other than the intended recipient.

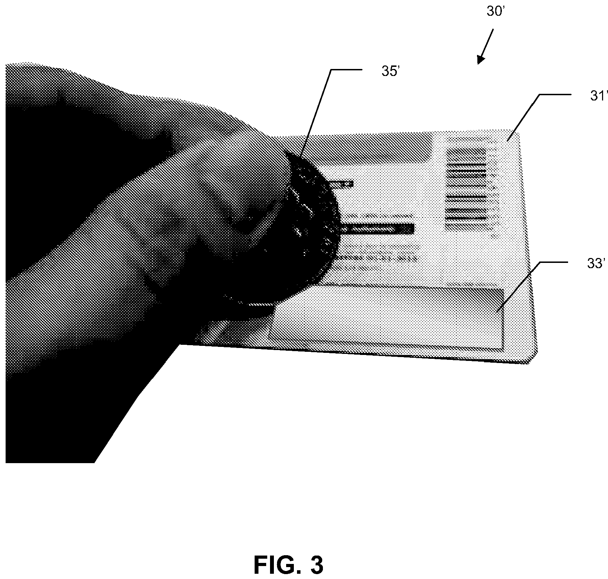

By way of example, the RF signal blocking layer **33** may comprise an electrical conductor. Referring more particularly to FIG. 3, in this example the RF signal blocking layer **33'** is frangible, meaning that it separates, breaks, or otherwise comes off in pieces or sections. More particularly, the RF signal blocking layer **33'** comprises a "scratch-off" layer, similar to those found on lottery tickets or game cards, but with conductive (e.g., metal) particulates therein that advantageously block RF signals. The RF signal blocking layer **33'** may therefore easily be removed by scratching or rubbing with a coin **35',** etc.

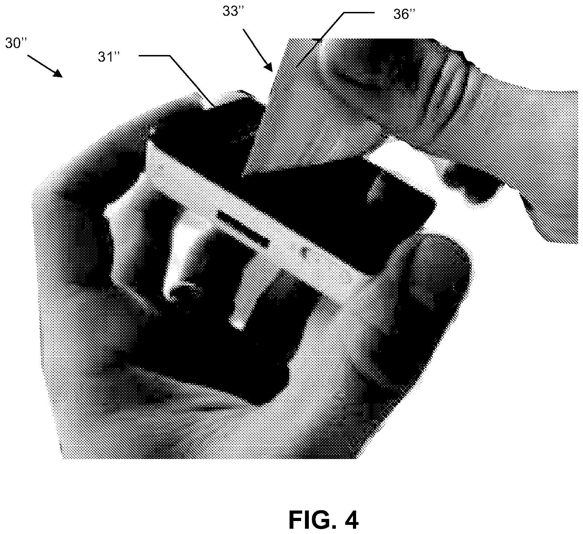

Another example is shown in FIG. 4, in which a pressure sensitive adhesive layer **36**" may be included for adhesively securing the RF signal blocking layer **33"** to the package **31"** so that it may be peeled off of the package. In this example, the package **31**" comprises a portable electronic device housing, and the pressure sensitive adhesive layer **36"** and RF signal blocking layer **33"** peel off as a single unitary body or piece (i.e., as a whole). However, perforations are used so that the pressure sensitive adhesive layer **36"** and RF signal blocking layer **33"** combination is frangible, i.e., it comes apart when peeled off so that it may not be replaced in its original form. Considered alternatively, this destroys the RF signal blocking layer **33".** Another approach is that the pressure sensitive adhesive layer **36"** may comprise a single-use adhesive, which may not provide for easy reapplication of the RF signal blocking layer **33**" once removed. Again, this may be used to help ensure that evidence of tampering cannot easily be hidden by reapplication of the RF signal blocking layer **33".**

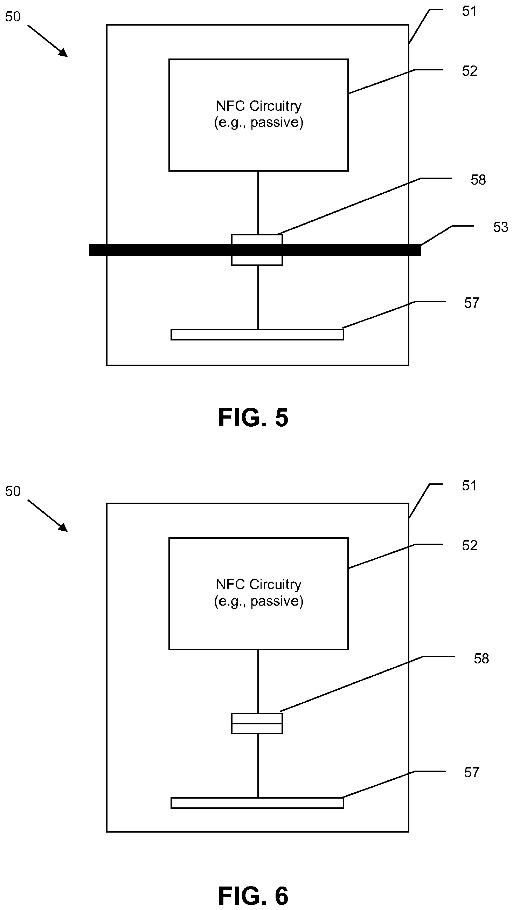

Another example embodiment of a communications device **50** is shown in FIG. 5. Here, NFC circuitry **52** (passive NFC circuitry in the illustrated example) is carried by a package **51,** and an antenna **57** is also carried by the package **51.** An electrical connector **58,** such as a spring or bias clip, is used to electrically couple or connect the NFC circuitry **52** with the antenna **57.** An RF signal blocking dielectric layer **53** is removably positioned or removably coupled to disrupt electrical contact between the NFC circuitry **52** and the antenna **57** at the electrical connector **58.** The RF signal blocking dielectric layer **53** may comprise a dielectric strip or sheet of material that interrupts signal flow between the NFC circuitry **52** and the antenna **57** when positioned or coupled therebetween. As such, the RF signal blocking dielectric layer **53** similarly blocks (i.e., by preventing, limiting, obstructing, etc.) operation of the NFC circuitry **52** as does the RF signal blocking layer **33** described above, but through blocking of RF signals downstream of the antenna **57** instead of upstream (i.e., blocking the signals from reaching the antenna in the first place). Upon removal of the RF signal blocking dielectric layer **53** (FIG. 6), the electrical connector **58** then provides an electrical connection between the NFC circuitry **52** and the antenna **57** so that NFC communication may take place.

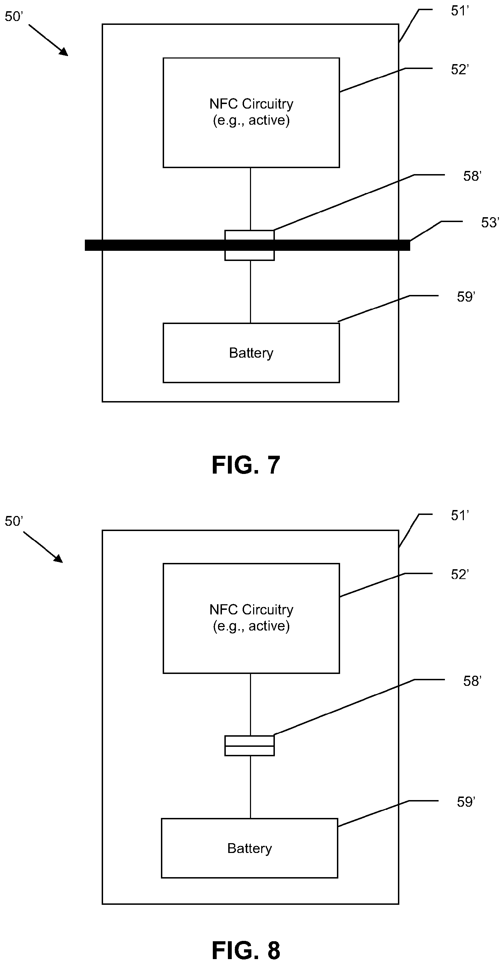

Referring additionally to FIGS. 7 and 8, yet another example implementation of the communications device **50'** may include a battery **59'** carried by the package **51',** and a power blocking dielectric layer **53'** removably coupled or positioned between the battery and the NFC circuitry **52'.** In this case, the NFC circuitry **52'** comprises active NFC circuitry, and coupling or positioning of the power blocking dielectric layer **53'** between the NFC circuitry and the battery **59'** at the electric connector **58'** advantageously prevents powering of the NFC circuitry. Upon removal of the power blocking dielectric layer **53'** (FIG. 8), powering of the NFC circuitry **52'** by the battery **59'** may occur.

Example components of a communications device **1000** that may further be used in accordance with the above-described embodiments are now described with reference to FIG. 9. The device **1000** illustratively includes a housing **1200,** a keypad or keyboard **1400** and an output device **1600.** The output device shown is a display **1600,** which may comprise a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400.**

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580**, and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem **1020** may include an infrared device and associated circuits and components, NFC or a Bluetooth™ communications module to provide for communication with similarly-enabled systems and devices.

## Claims

1. A communications device (30, 30") comprising:
a near-field communication (NFC) device; and
a radio frequency (RF) signal blocking layer (33, 33") adhesively coupled with said NFC device, said RF signal blocking layer being configured to block RF signal communication by said NFC device while coupled therewith;
wherein said RF signal blocking layer comprises an electrical conductor, **characterised in that** said adhesive coupling is by means of a pressure sensitive adhesive layer (36"), and
wherein the combination of said pressure sensitive adhesive layer and said RF signal blocking layer comprises perforations so as to come apart when peeled off.

2. The communications device (30, 30") of Claim 1 wherein said NFC device comprises active NFC circuitry.

3. The communications device (30, 30") of Claim 1 wherein said NFC device comprises passive NFC circuitry.

4. The communications device (30, 30") of Claim 1 wherein said NFC device comprises NFC circuitry (32) and an antenna (57) coupled therewith.

5. The communications device (30, 30") of Claim 1 wherein said NFC device comprises a package(31, 31") and NFC circuitry (32) carried by said package; and the communications device (30, 30") further comprising a wireless communications circuit (1001) carried by said package.

6. A method for making a communications device (30, 30"), the method comprising:
adhesively coupling a radio frequency (RF) signal blocking layer (33, 33") with a near-field communication (NFC) device,
the RF signal blocking layer being configured to block RF signal communication by the NFC device while coupled therewith,
the RF signal blocking layer comprising an electrical conductor, **characterised by** the adhesive coupling being by means of a pressure sensitive adhesive layer (36"), and
the combination of said pressure sensitive adhesive layer and said RF signal blocking layer comprising perforations so as to come apart when peeled off.

7. The method of Claim 6 wherein the NFC device comprises active NFC circuitry.

8. The method of Claim 6 wherein the NFC device comprises passive NFC circuitry.

## Patentansprüche

1. Kommunikationsvorrichtung (30, 30") mit:
einer Nahfeldkommunikations- (NFC-) Vorrichtung und
einer Hochfrequenz- bzw. Funkfrequenz- (HF-) Signalblockierschicht (33, 33"), die klebend an die NFC-Vorrichtung gekoppelt ist, wobei die HF-Signalblockierschicht dazu konfiguriert ist, eine HF-Signalkommunikation durch die NFC-Vorrichtung, während sie damit gekoppelt ist, zu blockieren,
wobei die HF-Signalblockierschicht einen elektrischen Leiter aufweist,
**dadurch gekennzeichnet, dass**
die klebende Kopplung mittels einer druckempfindlichen Klebeschicht (36") erfolgt und
wobei die Verbindung der druckempfindlichen Klebeschicht und der HF-Signalblockierschicht Perforierungen aufweist, um so bei einem Abziehen auseinanderzufallen.

2. Kommunikationsvorrichtung (30, 30") nach Anspruch 1, wobei die NFC-Vorrichtung eine aktive NFC-Schaltung aufweist.

3. Kommunikationsvorrichtung (30, 30") nach Anspruch 1, wobei die NFC-Vorrichtung eine passive NFC-Schaltung aufweist.

4. Kommunikationsvorrichtung (30, 30") nach Anspruch 1, wobei die NFC-Vorrichtung eine NFC-Schaltung (32) und eine Antenne (57) aufweist, die damit gekoppelt ist.

5. Kommunikationsvorrichtung (30, 30") nach Anspruch 1, wobei die NFC-Vorrichtung eine Einheit (31, 31") und eine NFC-Schaltung (32) aufweist, die von der Einheit getragen wird,
und wobei die Kommunikationsvorrichtung (30, 30") ferner eine Drahtloskommunikationsschaltung (1001) aufweist, die von der Einheit getragen wird.

6. Verfahren zum Herstellen einer Kommunikationsvorrichtung (30, 30"), wobei das Verfahren Folgendes aufweist:
klebendes Koppeln einer Hochfrequenz- bzw. Funkfrequenz- (HF-) Signalblockierschicht (33, 33") an eine Nahfeldkommunikations- (NFC-) Vorrichtung,
wobei die HF-Signalblockierschicht dazu konfiguriert ist, eine HF-Signalkommunikation durch die NFC-Vorrichtung, während sie damit gekoppelt ist, zu blockieren,
wobei die HF-Signalblockierschicht einen elektrischen Leiter aufweist,
**dadurch gekennzeichnet, dass**
das klebende Koppeln mittels einer druckempfindlichen Klebeschicht (36") erfolgt und
die Verbindung der druckempfindlichen Klebeschicht und der HF-Signalblockierschicht Perforierungen aufweist, um so bei einem Abziehen auseinanderzufallen.

7. Verfahren nach Anspruch 6, wobei die NFC-Vorrichtung eine aktive NFC-Schaltung aufweist.

8. Verfahren nach Anspruch 6, wobei die NFC-Vorrichtung eine passive NFC-Schaltung aufweist.

## Revendications

1. Dispositif de communication (30, 30") comprenant :
un dispositif de communication en champ proche, NFC pour « *Near Field Communication » ;* et
une couche d'interception de signaux de radiofréquences (33, 33'') couplé par adhésion audit dispositif NFC, ladite couche d'interception de signaux RF étant configurée pour intercepter la communication de signaux RF par ledit dispositif NFC lorsqu'elle lui est couplée ;
dans lequel ladite couche d'interception de signaux RF comprend un conducteur électrique ;
**caractérisé en ce que** :
ledit couplage par adhésion est réalisé à l'aide d'une couche adhésive sensible à la pression (36") ; et
dans lequel la combinaison de ladite couche adhésive sensible à la pression et de ladite couche d'interception de signaux RF comprend des perforations afin qu'elles se séparent lors du détachement par pelage.

2. Dispositif de communication (30, 30") selon la revendication 1, dans lequel ledit dispositif NFC comprend une circuiterie NFC active.

3. Dispositif de communication (30, 30") selon la revendication 1, dans lequel ledit dispositif NFC comprend une circuiterie NFC passive.

4. Dispositif de communication (30, 30") selon la revendication 1, dans lequel ledit dispositif NFC comprend une circuiterie NFC (32) et une antenne (57) qui lui est couplée.

5. Dispositif de communication (30, 30") selon la revendication 1, dans lequel ledit dispositif NFC comprend un boîtier (31, 31'') et la circuiterie NFC (32) est portée par ledit boîtier ; et le dispositif de communication (30, 30'') comprend en outre un circuit de communication sans fil (1001) porté par ledit boîtier.

6. Procédé de fabrication d'un dispositif de communication (30, 30''), le procédé comprenant les étapes consistant à :
coupler par adhésion une couche d'interception de signaux RF (33, 33'') et un dispositif de communication en champ proche, NFC pour « *Near Field Communication » ;*
la couche d'interception de signaux RF étant configurée pour intercepter la communication de signaux RF par le dispositif NFC lorsqu'elle lui est couplée ;
la couche d'interception de signaux RF comprenant un conducteur électrique ;
**caractérisé en ce que** le couplage par adhésion est réalisé à l'aide d'une couche adhésive sensible à la pression (36") ; et
la combinaison de ladite couche adhésive sensible à la pression et de ladite couche d'interception de signaux RF comprend des perforations afin qu'elles se séparent lors du détachement par pelage.

7. Procédé selon la revendication 6, dans lequel le dispositif NFC comprend une circuiterie NFC active.

8. Procédé selon la revendication 6, dans lequel le dispositif NFC comprend une circuiterie NFC passive.
